(19) Europäisches Patentamt
European Patent Office
Office européen des brevets

(11) EP 2 938 490 B1

(12) **EUROPEAN PATENT SPECIFICATION**

(45) Date of publication and mention of the grant of the patent:
**15.04.2020 Bulletin 2020/16**

(21) Application number: **13811731.2**

(22) Date of filing: **09.12.2013**

(51) Int Cl.:
***B32B 27/32*** (2006.01) ***B32B 27/34*** (2006.01)
***B32B 27/36*** (2006.01) ***C08L 23/08*** (2006.01)
***C08L 51/06*** (2006.01)

(86) International application number:
**PCT/US2013/073858**

(87) International publication number:
**WO 2014/105404 (03.07.2014 Gazette 2014/27)**

(54) **MULTILAYER FILMS CONTAINING FUNCTIONAL ETHYLENE-BASED POLYMER COMPOSITIONS**

MEHRSCHICHTFOLIEN ENTHALTEND FUNKTIONALISIERTE POLYMERZUSAMMENSETZUNGEN AUF GRUNDLAGE VON ETHYLEN

FILMS MULTICOUCHES COMPRENANT DES COMPOSITIONS POLYMÉRIQUES FONCTIONNALISÉ À BASE D'ÉTHYLÈNE.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2012 US 201261746856 P**

(43) Date of publication of application:
**04.11.2015 Bulletin 2015/45**

(73) Proprietor: **Dow Global Technologies LLC**
**Midland, MI 48674 (US)**

(72) Inventors:
- **KUPSCH, Eva-Marie**
  **CH-8820 Waedenswil (CH)**
- **GIUNTIN DE OLIVEIRA, Marlos**
  **CEP 13214-730 Jundiai/SP (BR)**
- **ONER-DELIORNAMLI, Didem**
  **Freeport , TX 77541 (US)**
- **BATRA, Ashish**
  **Zionsville, IN 46077 (US)**

(74) Representative: **Boult Wade Tennant LLP**
**Salisbury Square House**
**8 Salisbury Square**
**London EC4Y 8AP (GB)**

(56) References cited:
**EP-A2- 1 825 997**
**WO-A1-01/55275**
**WO-A1-2004/043694**
**WO-A1-2009/017588**
**US-A1- 2006 269 755**

- **J. M. DE GOOIJER ET AL: "Amine modified polyethylenes, prepared in near critical propane, as adhesion promoting agents in multilayered HDPE/PET films", POLYMER ENGINEERING & SCIENCE, vol. 41, no. 1, 1 January 2001 (2001-01-01), pages 86-94, XP055113061, ISSN: 0032-3888, DOI: 10.1002/pen.10711**
- **"OREVAC 18334, Linear low-density polyethylene tie resin for coextrusion", , 1 September 2010 (2010-09-01), XP055113084, Retrieved from the Internet: URL:http://www.orevac.com/export/sites/orevac/.content/medias/downloads/tds/tds_18334.pdf [retrieved on 2014-04-09]**
- **COLIN LI PI SHAN ET AL: "Block Index for Characterizing Olefin Block Copolymers", MACROMOLECULAR SYMPOSIA, vol. 257, 1 November 2007 (2007-11-01), pages 80-93, XP055113018,**
- **"Arkema OREVAC® 18334 Grafted Maleic Anhydride Polyethylene", , Retrieved from the Internet: URL:http://www.matweb.com [retrieved on 2018-06-07]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 938 490 B1

Printed by Jouve, 75001 PARIS (FR)

## Description

FIELD

The present disclosure is directed to multilayer films.

BACKGROUND

Polyethylene terephthalate (PET) is increasingly used in the outer layer of oriented films, in direct co-extrusion, to give the film the stiffness, heat resistance, and gloss. The PET provides, in combination with a barrier film, like PE-PA-EVOH-PA-PE film, the high stiffness, temperature resistance, puncture resistance, and high barrier properties needed to package food, with the security of a high oxygen barrier and excellent puncture resistance. To produce such films, the PET has to be coextruded, using an extrudable tie layer that can provide the interlayer adhesion between the PET and the polyolefin or barrier layer.

Typically, the structures, such as PET/tie/PE/tie/PA/tie/PE; PET/tie/ionomer or EAA/tie/PA/EVOH/PA/tie/PE; or PET/tie/PE/tie/PA/EVOH/tie/PE are often extruded into films ranging from 25 $\mu$m (microns) to 150 $\mu$m (microns). Some conventional tie-layer solutions include maleic anhydride modified ethylene methylacrylate polymers, and maleic anhydride modified ethylene vinyl acetate polymers. The tie layer requirements have been becoming more demanding, requiring higher adhesion properties. However these current tie-layer materials are often disadvantageous because of negative taste and odor properties and/or insufficient thermal stability at high processing temperatures ($\geq$ 225°C).

WO-A-2004/043694 discloses a transparent gas barrier packaging laminate comprising outside layers of heat-sealable olefin polymer, a first gas barrier layer of $SiO_x$, coated onto a first polymer carrier layer and a second gas barrier layer of $SiO_x$, coated onto a second polymer carrier layer.

An article entitled "Amine modified polyethylenes, prepared in near critical propane, as adhesion promoting agents in multilayered HDPE/PET films" taken from Polymer Engineering & Science, Vol. 41, no. 1 (2001-01-01), pages 86-94, discloses multilayer packaging films of PET bonded to HDPE with a tie layer.

Thus, there is a need for new film compositions that contain tie-layers that have improved adhesion to polar polymers (such as polyesters polylactic acids) and having good high temperature processability, and low taste and low odor levels. A need further exists for new multilayer film configurations that contain tie-layer compositions that have improved adhesion to polyesters.

SUMMARY

The present disclosure is directed to multilayer films. In an embodiment, the multilayer film includes at least three layers, a first layer, a second layer that is a tie layer and a third layer. The first layer is formed from a first composition. The first composition includes a polar polymer selected from a polyester, a polylactic acid, and combinations thereof. The second layer is formed from a second composition. The second composition includes at least the following:

A) a functionalized ethylene-based polymer; and
B) at least one olefin block copolymer.

The third layer is formed from a third composition. The third layer includes an olefin-based polymer, a functionalized olefin-based polymer or the salts thereof, a polyester, a polyamide, a polylactic acid, an ethylene vinyl alcohol copolymer, and combinations thereof.

An advantage of the present disclosure is a multilayer film with a tie layer having high adhesion to polar polymers and good processability at high processing temperature.

An advantage of the present disclosure is a multilayer film with a tie layer with low taste level and low odor level.

BRIEF DESCRIPTION OF THE DRAWINGS

Figure 1 is a schematic representation of a multilayer film in accordance with an embodiment of the present disclosure.
Figure 2 is a schematic representation depicting a "sealed film" used in the adhesion test.
Figure 3 is a schematic representation depicting a "pulled film" used in the adhesion test.

## DETAILED DESCRIPTION

The present disclosure provides a multilayer film. The multilayer film has a least three layers-a first layer, a second layer, and a third layer.

The first layer is formed from a first composition including a polar polymer. The polar polymer is selected from a polyester, a polylactic acid (PLA), and combinations thereof.

The second layer is formed from a second composition composed of (A) a functionalized ethylene-based polymer, (B) at least one olefin block copolymer, and combinations thereof.

The third layer is formed from a third composition. The third composition includes an olefin-based polymer, a functionalized olefin-based polymer or salts thereof, a polyester, a polyamide (PA), a PLA, an ethylene vinyl alcohol copolymer (EVOH), and combinations thereof.

### *1. First Layer*

The first layer is formed from a first composition composed of a polar polymer. The polar polymer is selected from a polyester, a polylactic acid (PLA), and combinations thereof.

In an embodiment, the polyester and the PLA each has a melting temperature (Tm) greater than 200°C, or greater than 230°C, or greater than 240°C, as determined by DSC. Nonlimiting examples of suitable polyester include polyethylene terephthalate (PET), polybutylene terephthalate (PBT), and other similar polymers.

In an embodiment, the first layer is composed solely of a polyester (*i.e.*, 100 wt % polyester), as the only polymer component. In a further embodiment, the first layer is composed solely of PET. In another embodiment, the first layer is composed solely of PBT, as the only polymer component.

In an embodiment, the first layer is composed solely of PLA (*i.e.*, 100 wt % PLA), as the only polymer component.

In an embodiment, the first composition comprises a blend of the polyester and the PLA. The blend may contain 30 wt %, or 40 wt %, or 50 wt %, or 60 wt %, or 70 wt %, or 80 wt %, or 90 wt % of the polyester and a reciprocal amount of the PLA-namely, 70 wt %, or 60 wt %, or 50 wt %, 40 wt %, 30 wt %, 20 wt %, or 10 wt % of the PLA. Weight percent is based on total weight of the first composition. In a further embodiment, the first composition is a PET/PLA blend in foregoing range. In another embodiment, the first composition is a PET/PBT blend in the foregoing range.

The first composition may comprise a combination of two or more embodiments as described herein. The first layer may comprise a combination of two or more embodiments described herein.

### *2. Second Layer*

The second layer is formed from a second composition comprising (A) a functionalized ethylene-based polymer, (B) at least one olefin block copolymer, and combinations thereof.

#### *A. Functionalized ethylene-based polymer (A)*

The term "functionalized ethylene-based polymer," as used herein, refers to an ethylene-based polymer that comprises at least one chemical group (chemical substituent), linked by a covalent bond, and which group comprises at least one hetero-atom. A heteroatom is defined as an atom which is not carbon or hydrogen. Common heteroatoms include, but are not limited to, oxygen, nitrogen, sulfur, phosphorus. In an embodiment, the functionalized ethylene-based polymer is selected from a functionalized ethylene-based homopolymer or a functionalized ethylene/a-olefin interpolymer.

Some examples of compounds that can be grafted onto the ethylene-based polymer include ethylenically unsaturated carboxylic acids and acid derivatives, such as esters, anhydrides, and acid salts. Examples include acrylic acid, methacrylic acid, maleic acid, fumaric acid, itaconic acid, citraconic acid, maleic anhydride, tetrahydrophthalic anhydride, norborn-5-ene-2,3-dicarboxylic acid anhydride, nadic anhydride, himic anhydride, and mixtures thereof. Maleic anhydride is a preferred compound.

In one embodiment, the functionalized ethylene-based polymer comprises at least one functional group selected from the following:

$$-\underset{\displaystyle COOR}{\underset{|}{CR'}}-$$

anhydride, and combinations thereof; and wherein R is hydrogen or alkyl, R' is hydrogen or alkyl. In a further embodiment, each alkyl group is, independently, methyl, ethyl, propyl or butyl. In an embodiment, the functionalized ethylene-based

polymer is selected from a functionalized ethylene homopolymer or a functionalized ethylene/alpha-olefin interpolymer. In a further embodiment, the functionalized ethylene-based polymer is a functionalized ethylene homopolymer. In another embodiment, the functionalized ethylene-based polymer is a functionalized ethylene/alpha-olefin interpolymer, and further a functionalized ethylene/alphaolefin copolymer. Preferred alpha-olefins include C3-C8 alpha-olefins, and further propylene, 1-butene, 1-hexene and 1-octene.

In an embodiment, the functionalized ethylene-based polymer comprises at least one anhydride group; and further at least one maleic anhydride group. In one embodiment, the functionalized ethylene-based polymer is selected from a functionalized ethylene homopolymer or a functionalized ethylene/alpha-olefin interpolymer. In a further embodiment, the functionalized ethylene-based polymer is a functionalized ethylene homopolymer. In another embodiment, the functionalized ethylene-based polymer is a functionalized ethylene/alpha-olefin interpolymer, and further a functionalized ethylene/alpha-olefin copolymer. Preferred alpha-olefins include C3-C8 $\alpha$-olefins, and further propylene, 1-butene, 1-hexene and 1-octene.

In an embodiment, the functionalized ethylene-based polymer is a maleic anhydride-grafted polymer. In an embodiment, the functionalized ethylene-based polymer is selected from a functionalized ethylene homopolymer or a functionalized ethylene/alpha -olefin interpolymer. In a further embodiment, the functionalized ethylene-based polymer is a functionalized ethylene homopolymer. In another embodiment, the functionalized ethylene-based polymer is a functionalized ethylene/alpha-olefin interpolymer, and further a functionalized ethylene/alphaolefin copolymer. Preferred alpha-olefins include C3-C8 alpha-olefins, and further propylene, 1-butene, 1-hexene and 1-octene.

In an embodiment, the amount of functional group(s) derived from the functionalized ethylene-based polymer is from 0.05, or 0.07, or 0.1, or 0.3, or 0.5, or 0.6, or 0.7, or 0.8 to 0.9, or 1.0, or 1.2, or 1.5, or 1.7, or 1.9, or 2.0 weight percent, based on the weight of the second composition. In a further embodiment, the functionalized ethylene-based polymer has a functional group level from 0.07 to 1.20 weight percent, based on the weight of the second composition. In a further embodiment, the functionalized ethylene-based polymer has a functional group level from 0.10 to 0.80 weight percent, based on the weight of the second composition.

In an embodiment, the amount of functional group(s) derived from the functionalized ethylene-based polymer is from 0.05, or 0.07, or 0.1, or 0.3, or 0.5, or 0.6, or 0.7, or 0.8 to 0.9, or 1.0, or 1.2, or 1.5, or 1.7, or 1.9, or 2.0 weight percent, based on the sum weight of components A and B. In a further embodiment, the functionalized ethylene-based polymer has a functional group level from 0.07 to 1.00 weight percent, based on the sum weight of components A and B. In a further embodiment, the functionalized ethylene-based polymer has a functional group level from 0.10 to 0.60 weight percent, based on the sum weight of components A and B.

In an embodiment, the functionalized ethylene-based polymer comprises MAH-grafted functionality. In a further embodiment, the MAH-graft level is from 0.05, or 0.07, or 0.1, or, 0.3, or 0.5, or 0.6, or 0.7, or 0.8 to 0.9, or 1.0, or 1.2, or 1.5, or 1.7, or 1.9, or 2.0 weight percent, based on the sum weight of components A and B. In a further embodiment, the MAH-graft level is from 0.07 to 1.20 weight percent, based on the sum weight of components A and B. In a further embodiment, the MAH-graft level is from 0.10 to 0.60 weight percent, based on the sum weight of components A and B.

In an embodiment, the functionalized ethylene-based polymer comprises MAH-grafted functionality. In a further embodiment, the MAH-graft level is from 0.05 to 2.0 weight percent, based on the weight of the functionalized ethylene-based polymer. In a further embodiment, the MAH-graft level is from 0.05, or 0.07, or 0.1, or 0.3, or 0.5, or 0.6, or 0.7, or 0.8 to 0.9, or 1.0, or 1.2, or 1.5, or 1.7, or 1.9, or 2.0 weight percent, based on the weight of the functionalized ethylene-based polymer. In a further embodiment, the MAH-graft level is from 0.07 to 1.00 weight percent, based on the weight of the functionalized ethylene-based polymer. In a further embodiment, the MAH-graft level is from 0.10 to 0.90 weight percent, based on the weight of the functionalized ethylene-based polymer. In a further embodiment, the MAH-graft level is from 0.50 to 1.50 weight percent, based on the weight of the functionalized ethylene-based polymer. In a further embodiment, the MAH-graft level is from 0.80 to 1.20 weight percent, based on the weight of the functionalized ethylene-based polymer.

In an embodiment, the functionalized ethylene-based polymer has a density from 0.860 to 0.960 g/cc, further from 0.865 to 0.940 g/cc, further from 0.870 to 0.920 g/cc, and further from 0.870 to 0.900 g/cc. In an embodiment, the functionalized ethylene-based polymer is selected from a functionalized ethylene homopolymer or a functionalized ethylene/a-olefin interpolymer. In a further embodiment, the functionalized ethylene-based polymer is a functionalized ethylene homopolymer. In another embodiment, the functionalized ethylene-based polymer is a functionalized ethylene/alpha-olefin interpolymer, and further a functionalized ethylene/alpha-olefin copolymer. Preferred alpha-olefins include C3-C8 alpha-olefins, and further propylene, 1-butene, 1-hexene and 1-octene.

In an embodiment, the functionalized ethylene-based polymer has a density less than 0.890 g/cc, or less than 0.885 g/cc, or less than 0.880 g/cc. In an embodiment, the functionalized ethylene-based polymer is selected from a functionalized ethylene homopolymer or a functionalized ethylene/alpha-olefin interpolymer. In a further embodiment, the functionalized ethylene-based polymer is a functionalized ethylene homopolymer. In another embodiment, the functionalized ethylene-based polymer is a functionalized ethylene/alpha-olefin interpolymer, and further a functionalized ethylene/alpha-olefin copolymer. Preferred alpha-olefins include C3-C8 alpha-olefins, and further propylene, 1-butene,

1-hexene and 1-octene.

In an embodiment, the functionalized ethylene-based polymer has a density greater than, or equal to, 0.850 g/cc, further greater than, or equal to, 0.855 g/cc, and further greater than, or equal to, 0.860 g/cc. In an embodiment, the functionalized ethylene-based polymer is selected from a functionalized ethylene homopolymer or a functionalized ethylene/alpha-olefin interpolymer. In a further embodiment, the functionalized ethylene-based polymer is a functionalized ethylene homopolymer. In another embodiment, the functionalized ethylene-based polymer is a functionalized ethylene/alpha-olefin interpolymer, and further a functionalized ethylene/alpha-olefin copolymer. Preferred alpha-olefins include C3-C8 alpha-olefins, and further propylene, 1-butene, 1-hexene and 1-octene.

In an embodiment, the functionalized ethylene-based polymer has a melt index (12: 2.16kg/190°C) from 0.1 g/10 min to 50 g/10 min, further from 0.5 g/10 min to 20 g/10 min, further from 1.0 g/10 min to 10 g/10 min, and further from 1.0 g/10 min to 8.0 g/10 min. In one embodiment, the functionalized ethylene-based polymer is selected from a functionalized ethylene homopolymer or a functionalized ethylene/alpha-olefin interpolymer. In a further embodiment, the functionalized ethylene-based polymer is a functionalized ethylene homopolymer. In another embodiment, the functionalized ethylene-based polymer is a functionalized ethylene/alpha-olefin interpolymer, and further a functionalized ethylene/alphaolefin copolymer. Preferred alpha-olefins include C3-C8 alpha-olefins, and further propylene, 1-butene, 1-hexene and 1-octene.

In an embodiment, the functionalized ethylene-based polymer has a melt index (12: 2.16kg/190°C) from 0.1 g/10 min to 20 g/10 min, further from 0.5 g/10 min to 10 g/10 min, and further from 1.0 g/10 min to 10 g/10 min. In one embodiment, the functionalized ethylene-based polymer is selected from a functionalized ethylene homopolymer or a functionalized ethylene/alpha-olefin interpolymer. In a further embodiment, the functionalized ethylene-based polymer is a functionalized ethylene homopolymer. In another embodiment, the functionalized ethylene-based polymer is a functionalized ethylene/alpha-olefin interpolymer, and further a functionalized ethylene/alpha-olefin copolymer. Preferred alpha-olefins include C3-C8 alpha-olefins, and further propylene, 1-butene, 1-hexene and 1-octene.

In an embodiment, the functionalized ethylene-based polymer is a functionalized ethylene/alpha-olefin interpolymer, and further a functionalized ethylene/alpha-olefin copolymer. Preferred alpha-olefins include C3-C8 alpha-olefins, and further propylene, 1-butene, 1-hexene and 1-octene. In a further embodiment, the base polymer (ethylene/alphaolefin interpolymer and further ethylene/alpha-olefin copolymer) used to form the functionalized ethylene/alpha-olefin interpolymer, and further a functionalized ethylene/alpha-olefin copolymer, has a density from 0.860 to 0.910 g/cc, further from 0.860 to 0.900 g/cc, and further from 0.860 to 0.890 g/cc. In a further embodiment, the base polymer has a melt index (12) from 1 to 20 g/10 min, further from 2 to 10 g/10 min, and further from 3 to 6 g/10 min. In a further embodiment, the base polymer has a melt index ratio, 121/12 from 1 to 10, further from 1 to 5, and further from 1 to 3.

In an embodiment, the functionalized ethylene-based polymer is a functionalized ethylene/alpha-olefin interpolymer, and further a functionalized ethylene/alpha-olefin copolymer. Preferred alpha-olefins include C3-C8 alpha-olefins, and further propylene, 1-butene, 1-hexene and 1-octene. In a further embodiment, the base polymer (ethylene/alphaolefin interpolymer and further ethylene/alpha-olefin copolymer) used to form the ethylene/alpha-olefin interpolymer, and further a functionalized ethylene/alpha-olefin copolymer, has a density less than 0.890 g/cc, further less than 0.885 g/cc, and further less than 0.880 g/cc. In a further embodiment, the based polymer has a melt index (12) from 1 to 20 g/10 min, further from 2 to 15g/10 min, and further from 3 to 10 g/10 min. In a further embodiment, the base polymer has a melt index ratio, 121/12 from 1 to 10, further from 1 to 8, and further from 1 to 5.

In an embodiment, the base polymer of the functionalized ethylene-based polymer has molecular weight distribution (Mw/Mn) greater than, or equal to, 1.1, or greater than, or equal to, 1.2, or greater than, or equal to, 1.5, or greater than, or equal to, 1.7, as determined by GPC. In a further embodiment, the base polymer is an ethylene/a-olefin interpolymer, and further an ethylene/a-olefin copolymer. Suitable $\alpha$-olefins are discussed above.

In an embodiment, the base polymer of the functionalized ethylene-based polymer has molecular weight distribution (Mw/Mn) less than, or equal to, 4.0, or less than, or equal to, 3.5, or less than, or equal to, 2.5, or less than, or equal to, 2.1, as determined by GPC. In a further embodiment, the base polymer is an ethylene/a-olefin interpolymer, and further an ethylene/a-olefin copolymer. Suitable $\alpha$-olefins are discussed above.

In an embodiment, the base polymer of the functionalized ethylene-based polymer is a homogeneously branched linear ethylene/$\alpha$-olefin interpolymer, and further a copolymer, or a homogeneous branched substantially linear interpolymer, and further a copolymer. Suitable $\alpha$-olefins are discussed above.

In an embodiment, the base polymer of the functionalized ethylene-based polymer is homogeneous branched substantially linear ethylene/a-olefin interpolymer, and further a copolymer. Suitable $\alpha$-olefins are discussed above.

In an embodiment, the base polymer of the functionalized ethylene-based polymer is a homogeneous branched linear ethylene/a-olefin interpolymer, and further a copolymer.

The terms "homogeneous" and "homogeneously-branched" are used in reference to an ethylene/a-olefin interpolymer, in which the $\alpha$-olefin comonomer is randomly distributed within a given polymer molecule, and all of the polymer molecules have the same or substantially the same comonomer-to-ethylene ratio.

The homogeneously branched linear ethylene interpolymers are ethylene polymers, which lack long chain

branching, but do have short chain branches, derived from the comonomer polymerized into the interpolymer, and which are homogeneously distributed, both within the same polymer chain, and between different polymer chains. These ethylene/a-olefin interpolymers have a linear polymer backbone, no measurable long chain branching, and a narrow molecular weight distribution. This class of polymers is disclosed, for example, by Elston in US Patent No. 3,645,992, and subsequent processes to produce such polymers, for example, using bis-metallocene catalysts, have been developed, as shown, for example, in EP 0 129 368; EP 0 260 999; US Patent No. 4,701,432; US Patent No. 4,937,301; US Patent No. 4,935,397; US Patent No. 5,055,438; and WO 90/07526. As discussed, the homogeneously branched linear ethylene interpolymers lack (no measurable) long chain branching, just as is the case for the linear low density polyethylene polymers or linear high density polyethylene polymers. Commercial examples of homogeneously branched linear ethylene/a-olefin interpolymers include TAFMER polymers from the Mitsui Chemical Company, and EXACT and EXCEED polymers from ExxonMobil Chemical Company.

The substantially linear ethylene/a-olefin interpolymers have long chain branching. The long chain branches have the same comonomer distribution as the polymer backbone, and can have about the same length as the length of the polymer backbone. "Substantially linear," typically, is in reference to a polymer that is substituted, on average, with "0.01 long chain branches per 1000 carbons" to "3 long chain branches per 1000 carbons." The length of a long chain branch is longer than the carbon length of a short chain branch, formed from the incorporation of one comonomer into the polymer backbone. See, for example, U.S. Patent Nos. 5,272,236; 5,278,272.

The substantially linear ethylene/a-olefin interpolymers form a unique class of homogeneously branched ethylene polymers. They differ substantially from the well-known class of conventional, homogeneously branched linear ethylene/a-olefin interpolymers, as discussed above, and, moreover, they are not in the same class as conventional heterogeneous "Ziegler-Natta catalyst polymerized" linear ethylene polymers (for example, ultra low density polyethylene (ULDPE), linear low density polyethylene (LLDPE) or high density polyethylene (HDPE), made, for example, using the technique disclosed by Anderson et al., in U.S. Patent 4,076,698); nor are they in the same class as high pressure, free-radical initiated, highly branched polyethylenes, such as, for example, low density polyethylene (LDPE), ethylene-acrylic acid (EAA) copolymers and ethylene vinyl acetate (EVA) copolymers.

Long chain branching can be determined by using $^{13}C$ Nuclear Magnetic Resonance (NMR) spectroscopy, and can be quantified using the method of Randall (Rev. Macromol. Chem. Phys., C29 (2 &3), 1989, p. 285-297), the disclosure of which is incorporated herein by reference. Two other methods are Gel Permeation Chromatography, couple with a Low Angle Laser Light Scattering detector (GPCLALLS), and Gel Permeation Chromatography, coupled with a Differential Viscometer detector (GPC-DV). The use of these techniques for long chain branch detection, and the underlying theories, have been well documented in the literature. See, for example, Zimm, B.H. and Stockmayer, W.H., J. Chem. Phys., 17,1301(1949) and Rudin, A., Modern Methods of Polymer Characterization, John Wiley & Sons, New York (1991) pp. 103-112.

In contrast to "substantially linear ethylene polymer," "linear ethylene polymer" means that the polymer lacks measurable or demonstrable long chain branches, that is, the polymer is substituted with an average of less than 0.01 long chain branch per 1000 carbons.

Suitable commercial functionalized olefin-based polymers include AMPLIFY GR and TY Functional Polymers (for example, AMPLIFY TY 1052H) available from The Dow Chemical Company.

The functionalized ethylene-based polymer may comprise a combination of two or more embodiments as described herein.

*B. Olefin Block Copolymer (B)*

The term "olefin block copolymer" or "OBC" means an ethylene/a-olefin multi-block copolymer and includes ethylene and one or more copolymerizable $\alpha$-olefin comonomer in polymerized form, characterized by multiple blocks or segments of two or more polymerized monomer units differing in chemical or physical properties. The terms "interpolymer" and "copolymer" are used interchangeably herein. When referring to amounts of "ethylene" or "comonomer" in the copolymer, it is understood that this means polymerized units thereof. In some embodiments, the multi-block copolymer can be represented by the following formula:

$$(AB)_n$$

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.
AAA-AA-BBB-BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

Preferable ethylene comprises the majority mole fraction of the whole block copolymer, i.e., ethylene comprises at least 50 mole percent of the whole polymer. More preferably ethylene comprises at least 60 mole percent, at least 70 mole percent, or at least 80 mole percent, with the substantial remainder of the whole polymer comprising at least one other comonomer that is preferably an $\alpha$-olefin having 3 or more carbon atoms. In some embodiments, the olefin block copolymer may comprise 50 mol% to 90 mol% ethylene, preferably 60 mol% to 85 mol%, more preferably 65 mol% to 80 mol%. For many ethylene/octene block copolymers, the preferred composition comprises an ethylene content greater than 80 mole percent of the whole polymer, and an octene content of from 10 to 15, preferably from 15 to 20 mole percent of the whole polymer.

The olefin block copolymer includes various amounts of "hard" and "soft" segments. "Hard" segments are blocks of polymerized units in which ethylene is present in an amount greater than 95 weight percent, or greater than 98 weight percent based on the weight of the polymer, up to 100 weight percent. In other words, the comonomer content (content of monomers other than ethylene) in the hard segments is less than 5 weight percent, or less than 2 weight percent based on the weight of the polymer, and can be as low as zero. In some embodiments, the hard segments include all, or substantially all, units derived from ethylene. "Soft" segments are blocks of polymerized units in which the comonomer content (content of monomers other than ethylene) is greater than 5 weight percent, or greater than 8 weight percent, greater than 10 weight percent, or greater than 15 weight percent based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, or greater than 60 weight percent and can be up to 100 weight percent.

The soft segments can be present in an OBC from 1 weight percent to 99 weight percent of the total weight of the OBC, or from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the OBC. Conversely, the hard segments can be present in similar ranges. The soft segment weight percentage and the hard segment weight percentage can be calculated based on data obtained from DSC or NMR. Such methods and calculations are disclosed in, for example, U.S. Patent No. 7,608,668, entitled "Ethylene/$\alpha$-Olefin Block Inter-polymers," filed on March 15, 2006, in the name of Colin L. P. Shan, Lonnie Hazlitt, et. al. and assigned to Dow Global Technologies Inc. In particular, hard and soft segment weight percentages and comonomer content may be determined as described in Column 57 to Column 63 of US 7,608,668.

The olefin block copolymer is a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In an embodiment, the blocks differ in the amount or type of incorporated comonomer, density, amount of crystallinity, crystallite size attributable to a polymer of such composition, type or degree of tacticity (isotactic or syndiotactic), regio-regularity or regio-irregularity, amount of branching (including long chain branching or hyper-branching), homogeneity or any other chemical or physical property. Compared to block interpolymers of the prior art, including interpolymers produced by sequential monomer addition, fluxional catalysts, or anionic polymerization techniques, the present OBC is characterized by unique distributions of both polymer polydispersity (PDI or Mw/Mn or MWD), block length distribution, and/or block number distribution, due, in an embodiment, to the effect of the shuttling agent(s) in combination with multiple catalysts used in their preparation.

In an embodiment, the OBC is produced in a continuous process, in a batch process or in a semi-batch process.

In an embodiment, the OBC has a polydispersity index, PDI, from 1.7 to 3.5, or from 1.8 to 3, or from 1.8 to 2.5, or from 1.8 to 2.2.

In an embodiment, the OBC has a polydispersity index, PDI, from 1.0 to 3.5, or from 1.3 to 3, or from 1.4 to 2.5, or from 1.4 to 2.

In an embodiment, the OBC is produced in a continuous process and possesses a polydispersity index, PDI, from 1.7 to 3.5, or from 1.8 to 3, or from 1.8 to 2.5, or from 1.8 to 2.2. When produced in a batch or semi-batch process, the OBC possesses PDI from 1.0 to 3.5, or from 1.3 to 3, or from 1.4 to 2.5, or from 1.4 to 2.

In addition, the olefin block copolymer possesses a PDI fitting a Schultz-Flory distribution rather than a Poisson distribution. The present OBC has both a polydisperse block distribution as well as a polydisperse distribution of block sizes. This results in the formation of polymer products having improved and distinguishable physical properties. The theoretical benefits of a polydisperse block distribution have been previously modeled and discussed in Potemkin,

Physical Review E (1998) 57 (6), pp. 6902-6912, and Dobrynin, J. Chem. Phys. (1997) 107 (21), pp 9234-9238.

In an embodiment, the present olefin block copolymer possesses a most probable distribution of block lengths. In an embodiment, the olefin block copolymer is defined as having:

(A) Mw/Mn from 1.7 to 3.5, at least one melting point, Tm, in degrees Celsius, and a density, d, in grams/cubic centimeter, where in the numerical values of Tm and d correspond to the relationship:

$$Tm > -2002.9 + 4538.5(d) - 2422.2(d)^2,$$

where d is from 0.850 g/cc, or 0.860 g/cc, or 0.866 g/cc, or 0.87 g/cc, or 0.880 g/cc to 0.89 g/cc, 0.91 g/cc, or 0.925 g/cc, and

Tm is from 113°C, or 115°C, or 117°C, or 118°C to 120°C, or 121°C, or 125°C; and/or

(B) Mw/Mn from 1.7 to 3.5, and is characterized by a heat of fusion, ΔH in J/g, and a delta quantity, ΔT, in degrees Celsius defined as the temperature difference between the tallest DSC peak and the tallest Crystallization Analysis Fractionation ("CRYSTAF") peak, wherein the numerical values of ΔT and ΔH have the following relationships:

$$\Delta T > -0.1299\ \Delta H + 62.81$$

for ΔH greater than zero and up to 130 J/g

$$\Delta T \geq 48°C$$

for ΔH greater than 130 J/g
wherein the CRYSTAF peak is determined using at least 5 percent of the cumulative polymer, and if less than 5 percent of the polymer has an identifiable CRYSTAF peak, then the CRYSTAF temperature is 30°C; and/or
(C) elastic recovery, Re, in percent at 300 percent strain and 1 cycle measured with a compression-molded film of the ethylene/a-olefin interpolymer, and has a density, d, in grams/cubic centimeter, wherein the numerical values of Re and d satisfy the following relationship when ethylene/a-olefin interpolymer is substantially free of crosslinked phase:

$$Re > 1481 - 1629(d);$$

and/or
(D) has a molecular fraction which elutes between 40°C and 130°C when fractionated using TREF, characterized in that the fraction has a molar comonomer content greater than, or equal to, the quantity (- 0.2013) T + 20.07, more preferably greater than or equal to the quantity (-0.2013) T+ 21.07, where T is the numerical value of the peak elution temperature of the TREF fraction, measured in °C; and/or,
(E) has a storage modulus at 25°C, G'(25°C), and a storage modulus at 100°C, G'(100°C), wherein the ratio of G'(25°C) to G'(100°C) is in the range of 1:1 to 9:1.

The olefin block copolymer may also have:

(F) a molecular fraction which elutes between 40°C and 130°C when fractionated using TREF, characterized in that the fraction has a block index of at least 0.5 and up to 1 and a molecular weight distribution, Mw/Mn, greater than 1.3; and/or
(G) average block index greater than zero and up to 1.0 and a molecular weight distribution, Mw/Mn greater than 1.3. It is understood that the olefin block copolymer may have one, some, all, or any combination of properties (A)-(G). Block Index can be determined as described in detail in US Patent No. 7,608,668. Analytical methods for determining properties (A) through (G) are disclosed in, for example, US Patent No 7,608,668, Col. 31, line 26 through Col. 35, line 44.

Suitable monomers for use in preparing the present OBC include ethylene and one or more addition polymerizable monomers other than ethylene. Examples of suitable comonomers include straight-chain or branched α-olefins of 3 to 30, preferably 3 to 20, carbon atoms, such as propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene; cyclo-olefins of 3 to 30, preferably 3 to 20, carbon atoms, such as cyclopentene, cycloheptene, norbornene, 5-methyl-2-norbornene, tetracyclododecene, and 2-methyl-1,4,5,8-dimethano-1,2,3,4,4a,5,8,8a-octahydronaphthalene; di-and polyolefins, such as butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidenenorbornene, vinyl norbornene, dicyclopentadiene, 7-methyl-1,6-octadiene, 4-ethylidene-8-methyl-1,7-nonadiene, and 5,9-dimethyl-1,4,8-decatriene; and 3-phenylpropene, 4-phenylpropene, 1,2-difluoroethylene, tetrafluoroethylene, and 3,3,3-trifluoro-1-propene.

The olefin block copolymer has a density of from 0.850 g/cc to 0.925 g/cc, or from 0.860 g/cc to 0.88 g/cc or from 0.860 g/cc to 0.879 g/cc. The OBC has a Shore A value of 40 to 70, preferably from 45 to 65 and more preferably from 50 to 65. In an embodiment, the olefin block copolymer has a melt index (MI) from 0.1 g/10 min to 50 g/10, or from 0.1 g/10 min to 30 g/10, or from 0.1 g/10 min to 20 g/10 min, or from 0.1 g/10 min to 15 g/10 min, as measured by ASTM D 1238 (190°C/2.16 kg).

The olefin block copolymers can be produced via a chain shuttling process such as described in US Patent No. 7,858,706, which is herein incorporated by reference. In particular, suitable chain shuttling agents and related information are listed in Col. 16, line 39 through Col. 19, line 44. Suitable catalysts are described in Col. 19, line 45 through Col. 46, line 19 and suitable co-catalysts in Col. 46, line 20 through Col. 51 line 28. The process is described throughout the document, but particularly in Col. Col 51, line 29 through Col. 54, line 56. The process is also described, for example, in the following: US Patent Nos. 7,608,668; US 7,893,166; and US 7,947,793.

The second composition may include more than one olefin block copolymer.

In an embodiment, the second layer is a tie layer.

An olefin block copolymer may comprise a combination of two or more embodiments as described herein.

The second composition may comprise a combination of two or more embodiments as described herein. The second layer may comprise a combination of two or more embodiments as described herein.

*C. Component (C)*

The second composition may optionally include a component (C).

In an embodiment, the component (C) is an ethylene/a-olefin interpolymer with a melt viscosity less than, or equal to, 50,000 mPa.s (50,000 cP) at 350°F (176.7 °C). In a further embodiment, the ethylene/a-olefin interpolymer has a melt index from 0.1 g/10 min to 25 g/10 min, or from 0.5g/10 min to 20 g/10 min, or from 0.8 g/10 min to 15 g/10 min and a density less than 0.963 g/cc, or less than 0.960 g/cc. or less than 0.955 g/cc.

In an embodiment, the component (C) is a linear low density polyethylene. Linear low density polyethylene ("LLDPE") comprises, in polymerized form, a majority weight percent of ethylene based on the total weight of the LLDPE. In an embodiment, the LLDPE is an interpolymer of ethylene and at least one ethylenically unsaturated comonomer. In one embodiment, the comonomer is a $C_3$-$C_{20}$ α-olefin. In another embodiment, the comonomer is a $C_3$-$C_8$ α-olefin. In another embodiment, the $C_3$-$C_8$ α-olefin is selected from propylene, 1-butene, 1-hexene, or 1-octene. In an embodiment, the LLDPE is selected from the following copolymers: ethylene/propylene copolymer, ethylene/butene copolymer, ethylene/hexene copolymer, and ethylene/octene copolymer. In a further embodiment, the LLDPE is an ethylene/octene copolymer.

The LLDPE has a density in the range from about 0.890 g/cc to about 0.940 g/cc, or from about 0.904 g/cc to about 0.94 g/cc. The LLDPE has a melt index (MI) from about 0.1 g/10 min to about 20 g/10 min, or about 0.5g/10 min to about 15g/10 min.

LLDPE can be produced with Ziegler-Natta catalysts, or single-site catalysts, such as vanadium catalysts, constrained geometry catalysts, and metallocene catalysts. In an embodiment, the LLDPE is produced with a Ziegler-Natta type catalyst. In one embodiment, the LLDPE is linear and does not contain long chain branching and is different than low density polyethylene ("LDPE") which is branched or heterogeneously branched polyethylene. LDPE has a relatively large number of long chain branches extending from the main polymer backbone. LDPE can be prepared at high pressure using free radical initiators, and typically has a density from 0.915 g/cc to 0.940 g/cc. LLDPE is different than high density polyethylene ("HDPE") which typically has a density greater than 0.940 g/cc.

In one embodiment, component (C) is a low density polyethylene (LDPE).

*D. Second composition-component proportions*

In an embodiment, the second composition comprises 10 wt %, or 20 wt %, or 30, wt %, or 40 wt %, or 50 wt %, or 60, wt % or 60 wt %, or 70 wt %, or 80 wt %, or 90 wt % of component A and a reciprocal amount of component

B-namely, 90 wt %, 80 wt %, 70 wt %, 60 wt %, 50 wt %, 40 wt %, 30 wt %, 20 wt %, 10 wt %, based on the sum weight of component A and component B.

In an embodiment, the second composition comprises 10 wt %, or 20 wt %, or 30, wt %, or 40 wt %, or 50 wt %, or 60, wt % or 60 wt %, or 70 wt %, or 80 wt %, or 90 wt % of component A and a reciprocal amount of component B-namely, 90 wt %, 80 wt %, 70 wt %, 60 wt %, 50 wt %, 40 wt %, 30 wt %, 20 wt %, 10 wt %, based on the total weight of the second composition.

In one embodiment, the weight ratio of component B to component A is from 99:1 to 10:90, further from 99:1 to 40:60; and further from 99:1 to 50:50.

In an embodiment, the second composition comprises less than, or equal to, 50 weight percent of the functionalized ethylene-based polymer of component A, based on the sum weight of component A and component B.

In an embodiment, the second composition comprises greater than, or equal to, 40 weight percent of the at least one olefin block copolymer of component B, based on the sum weight of component A and component B.

In an embodiment, the second composition comprises greater than, or equal to 80, or 90, or 95, or 98 weight percent of the "sum weight of components A and B," based on the weight of the second composition.

In an embodiment, the second composition has a melt index (12) from 0.1 to 15 further from 0.8 to 10, and further from 1.0 to 10 g/10 min.

In an embodiment, the second composition has a density from 0.860 to 0.930 g/cc, further from 0.870 to 0.920 g/cc.

The second composition may comprise a combination of two or more embodiments as described herein. The second layer may comprise two or more embodiments described herein.

*3. Third layer*

The third layer is formed from a third composition. The third composition includes an olefin-based polymer, a functionalized olefin-based polymer or salts thereof, a polyester, a polyamide (PA), a PLA, an ethylene vinyl alcohol copolymer (EVOH), and combinations thereof.

In one embodiment, the third composition comprises an olefin-based polymer.

The term, "olefin-based polymer," as used herein, refers to a polymer that comprises, in polymerized form, a majority amount of olefin monomer, for example ethylene or propylene (based on the weight of the polymer), and optionally may comprise one or more comonomers.

In one embodiment, the third composition comprises a functionalized olefin-based polymer.

The term "functionalized olefin-based polymer," as used herein, refers to an olefin-based polymer that comprises at least one chemical group (chemical substituent), linked by a covalent bond, and which group comprises at least one hetero-atom. A heteroatom is defined as an atom which is not carbon or hydrogen. Common heteroatoms include, but are not limited to, oxygen, nitrogen, sulfur, phosphorus. In an embodiment, the functionalized olefin-based polymer is selected from a functionalized ethylene-based homopolymer or a functionalized ethylene/a-olefin interpolymer. Suitable $\alpha$-olefins are discussed above.

In one embodiment, the functionalized olefin-based polymer is formed from an olefin-based polymer and at least one organic compound selected from an "amine-containing compound," a "hydroxyl-containing compound," an "imide-containing compound", an "anhydride-containing compounds," or a '"carboxylic acid-containing" compound.

In one embodiment, the at least one functionalized olefin-based polymer is present in an amount less than, or equal to, 20 weight percent, based on the total weight of the composition. In another embodiment, the at least one functionalized olefin-based polymer is present in an amount less than, or equal to, 10 weight percent, based on the total weight of the composition. In another embodiment, the at least one functionalized polymer is present in an amount less than, or equal to, 5 weight percent, based on the total weight of the composition. In another embodiment, the at least one functionalized olefin-based polymer is present in an amount greater than, or equal to, 20 weight percent, based on the total weight of the composition. In another embodiment, the at least one functionalized olefin-based polymer is present in an amount greater than, or equal to, 30 weight percent, based on the total weight of the composition. In another embodiment, the at least one functionalized olefin-based polymer is present in an amount greater than, or equal to, 40 weight percent, based on the total weight of the composition.

In another embodiment, the at least one functionalized olefin-based polymer has a density from about 0.85 g/cc to about 0.91 g/cc. In another embodiment, the at least one functionalized olefin-based polymer has a density from about 0.84 g/cc to about 0.93 g/cc. In another embodiment, the at least one functionalized olefin-based polymer has a density from about 0.85 g/cc to about 0.93 g/cc. In another embodiment, the at least one functionalized olefin-based polymer has a density from about 0.84 g/cc to about 0.90 g/cc.

In another embodiment, the at least one functionalized olefin-based polymer has a melt index (12) from 0.1 g/10 min to 100 g/10 min. In another embodiment, the at least one functionalized olefin-based polymer has a melt index (12) from 1 g/10 min to 50 g/10 min. In another embodiment, the at least one functionalized olefin-based polymer has

a melt index (12) from 1 g/10 min to 10 g/10 min.

In an embodiment, the at least one functionalized olefin-based polymer has a melt index (12) from 1 g/10 min to 20 g/10 min. In another embodiment, the at least one functionalized olefin-based polymer is formed from an ethylene-based polymer. In a further embodiment, the ethylene-based polymer is an ethylene/a-olefin interpolymer. In another embodiment, the α-olefin is a C3-C20 α-olefin, and preferably, a C3-C10 α-olefin. In a further embodiment, the α-olefin is selected from the group consisting of 1-propene, 1- butene, 1-hexene, and 1-octene, and preferably 1-butene and 1-octene. In another embodiment, the ethylene/a-olefin interpolymer, used to form the functionalized olefin-based polymer, further comprises a diene. In another embodiment, the ethylene/a-olefin interpolymer has a density from 0.85 g/cc to 0.93 g/cc. In another embodiment, the ethylene/a-olefin interpolymer has a melt index (12) from 0.01 g/10 min to 1500 g/10 min.

In another embodiment, the ethylene/a-olefin interpolymer, used to form the functionalized olefin-based polymer, is a homogeneously branched linear interpolymer or a homogeneously branched substantially linear interpolymer. In another embodiment, the ethylene/α-olefin interpolymer, used to form the functionalized olefin-based polymer, is a homogeneously branched substantially linear interpolymer.

In another embodiment, the at least one functionalized olefin-based polymer is formed from a propylene-based polymer. In another embodiment, the propylene-base polymer is a propylene/ethylene interpolymer or a propylene/a-olefin interpolymer. In another embodiment, the propylene-base polymer is a propylene/a-olefin interpolymer, wherein the α-olefin is a C4-C20 α-olefin, and preferably, a C4- C10 α-olefin. In another embodiment, the α-olefin is selected from the group consisting of 1-butene, 1-hexene, and 1-octene. In another embodiment, the propylene/a-olefin interpolymer has a density from 0.85 g/cc to 0.93 g/cc. In another embodiment, the propylene/a-olefin interpolymer has a melt index (12) from 0.01 g/10 min to 1500 g/10 min. In another embodiment, the propylene-base polymer is a propylene/ethylene interpolymer. In a further embodiment, the propylene/ethylene interpolymer has a density from 0.85 g/cc to 0.93 g/cc.

In one embodiment, the propylene/ethylene interpolymer has a melt index from 0.01 g/10 min to 1500 g/10 min.

In one embodiment, the at least one fictionalized olefin-based polymer is formed from an olefin multi-block interpolymer.

In one embodiment, the third composition comprises an olefin-based polymer, as described herein, and a functionalized olefin-based polymer, as described herein.

In one embodiment, the third composition comprises an olefin-based polymer and a polyester.

The polyester can be any polyester as disclosed in the first composition above. Nonlimiting examples of suitable polyester include PET and PBT.

In one embodiment, the third composition comprises an olefin-based polymer and a polylactic acid (PLA).

In one embodiment, the third composition comprises an olefin-based polymer and a polyamide (PA).

In one embodiment, the third composition comprises an olefin-based polymer and an ethylene vinyl alcohol copolymer (EVOH).

An olefin-based polymer may comprise a combination of two or more embodiments described herein.

A functionalized olefin-based polymer may comprise a combination of two or more embodiments described herein.

A polyester may comprise a combination of two or more embodiments described herein.

A polylactic acid may comprise a combination of two or more embodiments described herein.

A polyamide may comprise a combination of two or more embodiments described herein.

An ethylene vinyl alcohol copolymer may comprise a combination of two or more embodiments described herein.

The third composition may comprise two or more embodiments described herein. The third layer may comprise two or more embodiments described herein.

*4. Additives*

Any of the foregoing first composition, second composition and third composition may optionally include one or more additives. Suitable additives include but are not limited to antioxidants, fillers, UV stabilizers, foaming agents, flame retardants, colorants or pigments or combinations thereof.

*5. Multilayer films*

In an embodiment, the second layer can be used to form a tie layer between polar and nonpolar materials, particularly between polar and nonpolar polymeric materials, for example, between (i) a film layer of a nonpolar-polyolefin, such as polyethylene or polypropylene, (ii) a film layer of a polar polymer such as polylactic acid (PLA) or polyamide or polyester, (iii) a film layer of a barrier material such as polyamide (PA) or ethylene vinyl alcohol (EVOH).

The second layer of this disclosure is particularly well suited as a tie layer for binding together (iv) a polyethylene or polypropylene film, or a polyethylene or polypropylene surface of a molded article, to (v) a film, or surface of a molded

article, of an polylactic acid (PLA) or a polyester such as PET, PBT or (vi) a barrier layer. Any processes that combine co-extrusion, extrusion lamination, adhesive lamination, and/or foam casting or extrusion can be used to create these laminated structures, including structures in which one layer comprises a foam.

In an embodiment the first layer is in directly adjacent to second layer. The term "directly adjacent," as used herein, is intimate contact of one layer to another layer whereby no intervening layers or no intervening structures are located between the two layers. In a further embodiment, the first layer is coextruded to the second layer.

In an embodiment, the second layer is directly adjacent to the third layer. In a further embodiment, the second layer is coextruded to the third layer.

In an embodiment, the first layer is directly adjacent to the second layer and the second layer is directly adjacent to the third layer. In a further embodiment, the first layer is coextruded to the second layer and the second layer is coextruded to the third layer.

In an embodiment, the present multilayer film is a component of a five-layer film, or a seven-layer film.

In an embodiment, the present multilayer film is a component of a nine-layer film, or a 10 layer film, or a film containing 11 or more layers.

The present disclosure includes an article. In an embodiment, the article includes the present multilayer film. Nonlimiting examples of suitable articles include multilayer films, extrusion coated multilayer articles, laminated multilayer articles, thermoformed articles (sheets, trays, cups, containers) multilayer blow molded articles, and multilayered injection molded articles.

DEFINITIONS

Unless stated to the contrary, implicit from the context, or customary in the art, all parts and percents are based on weight, and all test methods are current as of the filing date of this disclosure.

The term "composition," as used herein, refers to one or more materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities (for example, catalyst residues) may be incorporated into and/or within the polymer.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The term, "olefin-based polymer," as used herein, refers to a polymer that comprises, in polymerized form, a majority amount of olefin monomer, for example ethylene or propylene (based on the weight of the polymer), and optionally may comprise one or more comonomers.

The term, "ethylene-based polymer," (or PE) as used herein, refers to a polymer that comprises, in polymerized form, a majority amount of ethylene monomer (based on the weight of the polymer), and optionally may comprise one or more comonomers.

The term, "ethylene/$\alpha$-olefin interpolymer," as used herein, refers to an interpolymer that comprises, in polymerized form, a majority amount of ethylene monomer (based on the weight of the interpolymer), and an $\alpha$-olefin.

The term, "ethylene/$\alpha$-olefin copolymer," as used herein, refers to a copolymer that comprises, in polymerized form, a majority amount of ethylene monomer (based on the weight of the copolymer), and an $\alpha$-olefin, as the only two monomer types.

The term, "propylene-based polymer," as used herein, refers to a polymer that comprises, in polymerized form, a majority amount of propylene monomer (based on the weight of the polymer), and optionally may comprise one or more comonomers.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of' excludes from the scope of any succeeding recitation any other component, step or procedure, excepting those that are not essential to operability. The term "consisting of" excludes any component, step or procedure not specifically delineated or listed.

TEST METHODS

*Determination of the Maleic Anhydride (MAH) content - Functionalized Ethylene-based Polymer and Second Composition*

Calibration: The maleic anhydride content is measured as follows. The dried resin sample (1-2 grams; functionalized polymer, or composition containing the MAH functionalized ethylene-based polymer and the ethylene/alkylacrylate copolymer (composition typically stabilized with ppm amounts of one more stabilizers)) is dissolved in 150 ml xylene, by heating the sample to 100°C, while stirring, on a stirred hot plate. Upon dissolution, the sample is titrated, while hot, with "0.025N tetrabutylammonium hydroxide (TBAOH) in 1:1 toluene/methanol" using 10 drops of bromothymol blue as an indicator. The endpoint is recorded when the solution turns blue.

FTIR: FTIR spectra are used for determining the level of g-MAH in each sample, using the method calibrated against the TBAOH titration analysis described above. The weight percent of g-MAH is determined from the ratio of the height of the peak at about 1790 $cm^{-1}$, corresponding to the carbonyl stretch of the anhydride, to the height of the 2751 $cm^{-1}$, as follows.

$$\text{wt \% MAH} = 0.0313 \text{ x } \frac{(\text{peak height @ ca. } 1790\text{cm}^{-1})}{(\text{peak height @ ca. } 2751\text{cm}^{-1})} + 0.2145 \text{ x } \frac{(\text{peak height @ ca. } 1790\text{cm}^{-1})}{(\text{peak height @ ca. } 2751\text{cm}^{-1})} + 0.0645$$

*Melt Index*

Melt index (12) was measured in accordance with ASTM D-1238 (190°C; 2.16 kg). The result was reported in grams/10 minutes. Melt flow rate (MFR) was measured in accordance with ASTM D-1238 (230°C; 2.16 kg). The result was reported in grams/10 minutes.

*Density*

Density was measured in accordance with ASTM D-792.

*Gel Permeation Chromatography (GPC)*

Conventional GPC measurements were used to determine the weight-average (Mw) and number-average (Mn) molecular weight of the polymer, and to determine the MWD (= Mw/Mn). "Samples are analyzed with a high-temperature GPC instrument (Polymer Laboratories, Inc. model PL220).

The method employs the well-known universal calibration method, based on the concept of hydrodynamic volume, and the calibration is performed using narrow polystyrene (PS) standards, along with four Mixed A 20μm columns (PLgel Mixed A from Agilent (formerly Polymer Laboratory Inc.)) operating at a system temperature of 140°C. Samples were prepared at a "2 mg/mL" concentration in 1,2,4-trichlorobenzene solvent. The flow rate is 1.0 mL/min, and the injection size was 100 microliters.

As discussed, the molecular weight determination was deduced by using narrow molecular weight distribution polystyrene standards (from Polymer Laboratories) in conjunction with their elution volumes. The equivalent polyethylene molecular weights were determined by using appropriate Mark-Houwink coefficients for polyethylene and polystyrene (as described by Williams and Ward in Journal of Polymer Science, Polymer Letters, Vol. 6, (621) 1968) to derive the following equation:

$$\text{Mpolyethylene} = \text{a} * (\text{Mpolystyrene})^{\text{b}}.$$

In this equation, a = 0.4316 and b = 1.0 *(as described in* Williams and Ward, J. Polym. Sc., Polym. Let., 6, 621 (1968*))*. Polyethylene equivalent molecular weight calculations were performed using VISCOTEK TriSEC software Version 3.0.

*Differential Scanning Calorimetry (DSC)*

Differential Scanning Calorimetry (DSC) was used to measure crystallinity in the polymers (e.g., ethylene-based (PE) polymers). About 5 to 8 mg of polymer sample was weighed and placed in a DSC pan. The lid was crimped on the pan to ensure a closed atmosphere. The sample pan was placed in a DSC cell, and then heated, at a rate of approximately 10°C/min, to a temperature of 180°C for PE (230°C for polypropylene, or "PP"). The sample was kept at this temperature for three minutes. Then the sample was cooled at a rate of 10°C/min to -60°C for PE (-40°C for PP), and kept isothermally at that temperature for three minutes. The sample was next heated at a rate of 10°C/min, until complete melting (second heat). The percent crystallinity was calculated by dividing the heat of fusion ($H_f$), determined from the second heat curve, by a theoretical heat of fusion of 292 J/g for PE (165 J/g, for PP), and multiplying this quantity by 100 (for example, % cryst. = ($H_f$/292 J/g) x 100 (for PE)).

Unless otherwise stated, melting point(s) ($T_m$) of each polymer is determined from the second heat curve (peak Tm), and the crystallization temperature ($T_c$) is determined from the first cooling curve (peak Tc).

Some embodiments of the present disclosure will now be described in detail in the following Examples.

EXAMPLES

*1. Materials*

Materials used in this study are provided in Table 1 and Table 2 below. Polymers are typically stabilized with one or more antioxidants and/or other stabilizers.

Table 1: Materials for layer formulations

| Polymer | Density [g/cm$^3$] | MI [g/10min] | Type | Source |
|---|---|---|---|---|
| CUMASTRETCH FX NATURAL | 1.4 | 0.8 | polyethylene terephthalate | Dufor |
| DOWLEX NG 5056G | 0.919 | 1.1 | Linear Low Density Polyethylene | Dow Chemical |
| NYLON 5034B (PA) | 1.140 | | Copolyamide 6/66 | UBE |
| EVAL F171B | 1.19 | 1.8 | Ethylene-Vinylalcohol Copolymer (EVOH) | Kuraray |
| ADMER SF 730E | 0.90 | 2.7 | elastomer based adhesive | Mitsui |
| BYNEL 21E787 | 0.930 | 1.6 | anhydride modified ethylene acrylate | DuPont |

Table 2: Materials for tie layer formulations

| Material | Density [g/cm$^3$] | MI [g/10min] | EA (%) | MAH (%) | Source |
|---|---|---|---|---|---|
| INFUSE 9500 | 0.875 | 5.0 | - | - | Dow Chemical |
| AMPLIFY TY 1052H | 0.870 | 1.25 | - | 0.8 | Dow Chemical |

*2. Tie layer compositions and preparation*

Tie layer formulations 1-3 using the materials specified in Table 2 were compounded on a BUSS Kneader following the weight percent ratios shown in Table 3 below. All components were mixed at 190°C for two minutes. Tie layer 2 (ADMER SF 730E) and tie layer 3 (BYNEL 21E 787) are commercial resins that are known to be used as tie layer resins in films containing PET. Weight percent in Table 3 is based on total weight of the tie layer formulation.

Table 3: Tie layer formulations

| Resins (wt %) | 1 | 2* | 3* |
|---|---|---|---|
| INFUSE 9500 | 50 | | |
| AMPLIFY TY 1052H | 50 | | |

(continued)

| Resins (wt %) | 1 | 2* | 3* |
|---|---|---|---|
| ADMER SF 730E | | 100 | |
| BYNEL 21E 787 | | | 100 |
| Tie layer physical properties | | | |
| Density [g/cm$^3$] ASTM D 793 | 0.875 | 0.903 | 0.90 |
| MI [g/10min] | 2.95 | 2.7 | 1.6 |
| VICAT Softening point (°C) ASTM D1525 | 41 | 56 | 53 |
| Shore A ASTM D2240 | 71 | 83 | 84 |
| * comparative sample | | | |

For the tie layer formulations noted in Table 3, Inventive Example 1 has a melting point (Tm, peak temperature, major peak, DSC) of 122°C, comparative sample 2 has a melting point (Tm, peak temperature, major peak, DSC) of 67°C, and comparative sample 3 a melting point (Tm, peak temperature, major peak, DSC) of 92°C. The major peak is the endotherm peak with the largest peak area, as determined from the second heating profile. Inventive Example 1 has a lower Shore A value than comparative sample 2 and comparative sample 3. Bounded by no particular theory, it is believed that the high melting point and low Shore A hardness of Inventive Example 1 will (i) improve elasticity, (ii) improve thermal stability, and (iii) promote adhesion for a tie layer prepared from Inventive Example 1 when compared to a tie layer prepared from either comparative sample 2 or comparative sample 3. Thus, these results further indicate that a multilayer film prepared using Example 1 as the tie layer will have better thermal stability, compared to a similar multilayer film with tie layer prepared using either comparative sample 2 or comparative sample 3.

*3. Preparation of multilayer film*

Seven-layered films were extruded on a "7-Layer Dr. Collin Line," with the layer distributions provided in Table 4 below. The extrusion conditions were as follows:

BUR: 2.5,
Lay flat width: 235.6 mm,
Total thickness of film 100 $\mu$m (micron),
Extruder I: 250-260°C, 23 rotations per minute (rpm)
Extruder II: 230°C, 18 rpm,
Extrduer III: 230°C, 65 rpm,
Extruder IV: 230°C, 20 rpm,
Extruder V: 250°C, 81 rpm,
Extruder VI: 230°C, 20 rpm, and
Extruder VII: 220°C, 60 rpm.

PET and PA are dried before extruding. After drying the PET and PA are immediately extruded.

Table 4: Film structure with PA barrier used for tie layer 1, 2, or 3. Total thickness of film 100 $\mu$m (micron)

| Layers | Thickness ($\mu$m) | Resin |
|---|---|---|
| I (outside) | 11 | CUMASTRETCH FX (PET) |
| II | 6 | Tie layer 1, 2, or 3 |
| III | 18 | DOWLEX NG 5056G (LLDPE) |
| IV | 6 | Tie layer 1, 2, or 3 |
| V | 23 | NYLON 5034B (PA) |
| VI | 6 | Tie layer 1, 2, or 3 |
| VII (inside) | 30 | DOWLEX NG 5056G |

*4. Adhesion measurement*

Films (100 μm (microns)), produced according to the configuration shown in Table 4, were cut into A4 sheets (21 cm x 29.7 cm). A schematic representation of a multilayer film with a thickness of 100 μm (microns) and the layer configuration of Table 4 is shown in Figure 1. The longer side (29.7 cm) was along the machine direction. The described A4 sheet was folded along the center line, so that layer VII was in contact with layer VII. The mid-section of the folded film sample was sealed on a Seal Equipment KOPP SGPE 20, which has following characteristics: both seal bar width 5 mm and seal bar length 200 mm, TEFLON coated; upper and lower seal bar heated to 130°C.; seal direction = cross direction.

The upper and lower seal bars were pressed onto the sample, with a pressure of 0.5 N/ $mm^2$, for 0.5 seconds to produce a sealed film as shown in Figure 2. The sealed films were stored for 48 hours, at 23°C, according ISO 293. Then "15 mm wide" strips were cut, long enough to fit into the tensile machine, which has a grip distance of 35 mm. The test sample was pulled open in an Lloyd LR 5K seal strength tester, with a speed of 100 mm/min. As shown in Figure 3, the test sample was pulled in a 180° angle, until the test sample fully broke. The "force at peak" was reported in the table below. This "force at peak" indicates the "minimum seal strength," also interpreted in this case as "minimum adhesion force," to the PET layer, since all the tie layers in the films produced were of the same formulation, and the adhesion of the tie layer to the PET is the weaker interface compared to the polyamide (PA)-tie layer interlayer. Seal strengths were listed in Table 5 below.

Table 5: Seal strength (minimum adhesion to PET) in PA barrier film using the layer distribution explained in Table 4.

| Tie layer | Force at Peak (min. adhesion force to PET) [N/15 mm] |
|---|---|
| 1 | 39.2 |
| 2* | 41.1 |
| 3* | 21.2 |
| *comparative | |

*5. Discussion*

Tie layer 1, a blend of olefin block copolymer combined with maleic anhydride (MAH) grafted ethylene/octene elastomer unexpectedly demonstrates high adhesion (39.2 N/15 mm) values when used as a tie layer between PET and ethylene-based polymer (PE). Tie layer 1 matched the adhesion of ADMER SF 730E, and exceeded the adhesion of BYNEL 21E 787 (maleic anhydride modified ethylene alkyl acrylate terpolymer). Bounded by no particular theory, it is believed that the MAH reacts with the PET at coextrusion melt temperature greater than or equal to 160°C.

In addition to the high adhesion demonstrated by Inventive Example 1, the multilayer film with tie layer of Inventive Example 1 will have improved thermal stability compared to multilayer film with tie layer prepared from either comparative sample 2 or comparative sample 3.

Furthermore, the present tie layer is able to obtain three following properties.

1. Adhesion to PET, PP, PE , sodium and zinc ionomers.
2. Adhesion to EVOH, barrier layers and PA barrier layer.
3. Good processability on blown film lines.

PET in combination with the present tie layer (and optional other layers) can be used to produce a film to replace aluminum or metalized laminates in flexible packaging solutions.

## Claims

**1.** A multilayer film comprising:

at least three layers, a first layer, a second layer that is a tie layer and a third layer;
the first layer is formed from a first composition comprising a polar polymer selected from the group consisting of a polyester, a polylactic acid, and combinations thereof;
the second layer is formed from a second composition comprising at least the following

A) a functionalized ethylene-based polymer, and
B) at least one olefin block copolymer that is an ethylene/a-olefin multi-block copolymer; and

the third layer is formed from a third composition comprising an olefin-based polymer, a functionalized olefin-based polymer or the salts thereof, a polyester, a polyamide, a polylactic acid, an ethylene vinyl alcohol copolymer, and combinations thereof.

**2.** The multilayer film of claim 1, wherein the first layer is directly adjacent to the second layer.

**3.** The multilayer film of any one of the previous claims, wherein the second composition comprises less than or equal to 50 weight percent of the functionalized ethylene-based polymer of component A, based on the sum weight of component A and component B.

**4.** The multilayer film of any one of the previous claims, wherein the second composition comprises greater than, or equal to, 40 weight percent of the at least one olefin block copolymer of component B, based on the sum weight of component A and component B.

**5.** The multilayer film of any one of the previous claims, wherein the second composition comprises greater than, or equal to, 90 weight percent of the sum weight of components A and B, based on the weight of the second composition.

**6.** The multilayer film of any one of the previous claims, wherein the weight ratio of component B to component A is from 90:10 to 40:60.

**7.** The multilayer film of any one of the previous claims, wherein the at least one olefin block copolymer of component B has a density from 0.86 g/cc to 0.92 g/cc.

**8.** The multilayer film of any one of the previous claims, wherein the at least one olefin block copolymer of component B has a melt index (12) from 0.1 g/10 min to 50 g/10 min and a Shore A valve from 40 to 70 as measured in accordance with ASTM D2240.

**9.** The multilayer film of any one of the previous claims, wherein the at least one olefin block copolymer of component B has a melting point (Tm) greater than, or equal to, 93°C, as determined by DSC.

**10.** The multilayer film of any one of the previous claims, wherein the functionalized ethylene-based polymer of component A is selected from a functionalized ethylene homopolymer or a functionalized ethylene/a-olefin interpolymer.

**11.** The multilayer film of any one of the previous claims, wherein the functionalized ethylene-based polymer of component A is a MAH-grafted ethylene-based polymer.

**12.** The multilayer film of claim 11, wherein the MAH-graft level is from 0.05 to 1.90 weight percent, based on the weight of the second composition.

**13.** The multilayer film of any one of the previous claims, wherein the polyester or polylactic acid has a melting point (Tm) greater than 200°C.

**14.** The multilayer film of any one of the previous claims, wherein the second composition further comprises a linear low density polyethylene.

**15.** An article comprising the multilayer film of any of any one of the previous claims.

## Patentansprüche

**1.** Eine Mehrschichtfolie, die Folgendes beinhaltet:

mindestens drei Schichten, eine erste Schicht, eine zweite Schicht, die eine Haftschicht ist, und eine dritte Schicht;
die erste Schicht ist aus einer Zusammensetzung gebildet, die ein polares Polymer beinhaltet, das aus der

Gruppe, bestehend aus einem Polyester, einer Polymilchsäure und Kombinationen davon, ausgewählt ist; die zweite Schicht ist aus einer zweiten Zusammensetzung gebildet, die mindestens Folgendes beinhaltet:

A) ein funktionalisiertes Polymer auf der Grundlage von Ethylen und
B) mindestens ein Olefinblockcopolymer, das ein Ethylen-$\alpha$-Olefin-Multiblockcopolymer ist; und

die dritte Schicht ist aus einer dritten Zusammensetzung gebildet, die ein Polymer auf der Grundlage von Olefin, ein funktionalisiertes Polymer auf der Grundlage von Olefin oder die Salze davon, einen Polyester, ein Polyamid, eine Polymilchsäure, ein EthylenVinylalkohol-Copolymer und Kombinationen davon beinhaltet.

**2.** Mehrschichtfolie gemäß Anspruch 1, wobei die erste Schicht der zweiten Schicht direkt benachbart ist.

**3.** Mehrschichtfolie gemäß einem der vorhergehenden Ansprüche, wobei die zweite Zusammensetzung, bezogen auf das Summengewicht der Komponente A und der Komponente B, zu weniger als oder gleich 50 Gewichtsprozent das funktionalisierte Polymer auf der Grundlage von Ethylen der Komponente A beinhaltet.

**4.** Mehrschichtfolie gemäß einem der vorhergehenden Ansprüche, wobei die zweite Zusammensetzung, bezogen auf das Summengewicht der Komponente A und der Komponente B, zu mehr als oder gleich 40 Gewichtsprozent das mindestens eine Olefinblockcopolymer der Komponente B beinhaltet.

**5.** Mehrschichtfolie gemäß einem der vorhergehenden Ansprüche, wobei die zweite Zusammensetzung, bezogen auf das Gewicht der zweiten Zusammensetzung, zu mehr als oder gleich 90 Gewichtsprozent das Summengewicht der Komponenten A und B beinhaltet.

**6.** Mehrschichtfolie gemäß einem der vorhergehenden Ansprüche, wobei das Gewichtsverhältnis von Komponente B zu Komponente A von 90 : 10 bis 40 : 60 beträgt.

**7.** Mehrschichtfolie gemäß einem der vorhergehenden Ansprüche, wobei das mindestens eine Olefinblockcopolymer der Komponente B eine Dichte von 0,86 g/$cm^3$ bis 0,92 g/$cm^3$ aufweist.

**8.** Mehrschichtfolie gemäß einem der vorhergehenden Ansprüche, wobei das mindestens eine Olefinblockcopolymer der Komponente B einen Schmelzindex (12) von 0,1 g/10 min bis 50 g/10 min und einen Shore-A-Wert, wie gemäß ASTM D2240 gemessen, von 40 bis 70 aufweist.

**9.** Mehrschichtfolie gemäß einem der vorhergehenden Ansprüche, wobei das mindestens eine Olefinblockcopolymer der Komponente B einen Schmelzpunkt (Tm) von mehr als oder gleich 93 °C, wie mit DDK bestimmt, aufweist.

**10.** Mehrschichtfolie gemäß einem der vorhergehenden Ansprüche, wobei das funktionalisierte Polymer auf der Grundlage von Ethylen der Komponente A aus einem funktionalisierten Ethylenhomopolymer oder einem funktionalisierten Ethylen-$\alpha$-Olefin-Interpolymer ausgewählt ist.

**11.** Mehrschichtfolie gemäß einem der vorhergehenden Ansprüche, wobei das funktionalisierte Polymer auf der Grundlage von Ethylen der Komponente A ein MSAgepfropftes Polymer auf der Grundlage von Ethylen ist.

**12.** Mehrschichtfolie gemäß Anspruch 11, wobei der MSA-Pfropfungsgrad von 0,05 bis 1,90 Gewichtsprozent beträgt, bezogen auf das Gewicht der zweiten Zusammensetzung.

**13.** Mehrschichtfolie gemäß einem der vorhergehenden Ansprüche, wobei der Polyester oder die Polymilchsäure einen Schmelzpunkt (Tm) von mehr als 200 °C aufweist.

**14.** Mehrschichtfolie gemäß einem der vorhergehenden Ansprüche, wobei die zweite Zusammensetzung ferner ein lineares Polyethylen niederer Dichte beinhaltet.

**15.** Ein Artikel, der die Mehrschichtfolie gemäß einem der vorhergehenden Ansprüche beinhaltet.

## Revendications

**1.** Un film multicouche comprenant :

au moins trois couches, une première couche, une deuxième couche qui est une couche de liaison et une troisième couche ;
la première couche est formée à partir d'une première composition comprenant un polymère polaire sélectionné dans le groupe constitué d'un polyester, d'un acide polylactique, et de combinaisons de ceux-ci ;
la deuxième couche est formée à partir d'une deuxième composition comprenant au moins ce qui suit

A) un polymère à base d'éthylène fonctionnalisé, et
B) au moins un copolymère bloc oléfinique qui est un copolymère multibloc d'éthylène/a-oléfine ; et

la troisième couche est formée à partir d'une troisième composition comprenant un polymère à base d'oléfine, un polymère à base d'oléfine fonctionnalisé ou les sels de celui-ci, un polyester, un polyamide, un acide polylactique, un copolymère d'éthylène et d'alcool vinylique, et des combinaisons de ceux-ci.

**2.** Le film multicouche de la revendication 1, dans lequel la première couche est directement adjacente à la deuxième couche.

**3.** Le film multicouche de n'importe laquelle des revendications précédentes, dans lequel la deuxième composition comprend un pourcentage inférieur ou égal à 50 pour cent en poids du polymère à base d'éthylène fonctionnalisé du constituant A, rapporté à la somme des poids du constituant A et du constituant B.

**4.** Le film multicouche de n'importe laquelle des revendications précédentes, dans lequel la deuxième composition comprend un pourcentage supérieur ou égal à 40 pour cent en poids de l'au moins un copolymère bloc oléfinique du constituant B, rapporté à la somme des poids du constituant A et du constituant B.

**5.** Le film multicouche de n'importe laquelle des revendications précédentes, dans lequel la deuxième composition comprend un pourcentage supérieur ou égal à 90 pour cent en poids de la somme des poids des constituants A et B, rapporté au poids de la deuxième composition.

**6.** Le film multicouche de n'importe laquelle des revendications précédentes, dans lequel le rapport en poids du constituant B au constituant A va de 90/10 à 40/60.

**7.** Le film multicouche de n'importe laquelle des revendications précédentes, dans lequel l'au moins un copolymère bloc oléfinique du constituant B a une masse volumique allant de 0,86 g/cm$^3$ à 0,92 g/cm$^3$.

**8.** Le film multicouche de n'importe laquelle des revendications précédentes, dans lequel l'au moins un copolymère bloc oléfinique du constituant B a un indice de fluidité à l'état fondu (I2) allant de 0,1 g/10 min. à 50 g/10 min. et une valeur de dureté Shore A allant de 40 à 70 telle que mesurée selon l'ASTM D2240.

**9.** Le film multicouche de n'importe laquelle des revendications précédentes, dans lequel l'au moins un copolymère bloc oléfinique du constituant B a un point de fusion (Tm) supérieur ou égal à 93 °C, tel que déterminé par DSC.

**10.** Le film multicouche de n'importe laquelle des revendications précédentes, dans lequel le polymère à base d'éthylène fonctionnalisé du constituant A est sélectionné parmi un homopolymère d'éthylène fonctionnalisé ou un interpolymère d'éthylène/a-oléfine fonctionnalisé.

**11.** Le film multicouche de n'importe laquelle des revendications précédentes, dans lequel le polymère à base d'éthylène fonctionnalisé du constituant A est un polymère à base d'éthylène greffé par MAH.

**12.** Le film multicouche de la revendication 11, dans lequel le niveau de greffe MAH va de 0,05 à 1,90 pour cent en poids, rapporté au poids de la deuxième composition.

**13.** Le film multicouche de n'importe laquelle des revendications précédentes, dans lequel le polyester ou l'acide polylactique a un point de fusion (Tm) supérieur à 200 °C.

14. Le film multicouche de n'importe laquelle des revendications précédentes, dans lequel la deuxième composition comprend en outre un polyéthylène basse densité linéaire.

15. Un article comprenant le film multicouche de n'importe laquelle des revendications précédentes.

Figure 1

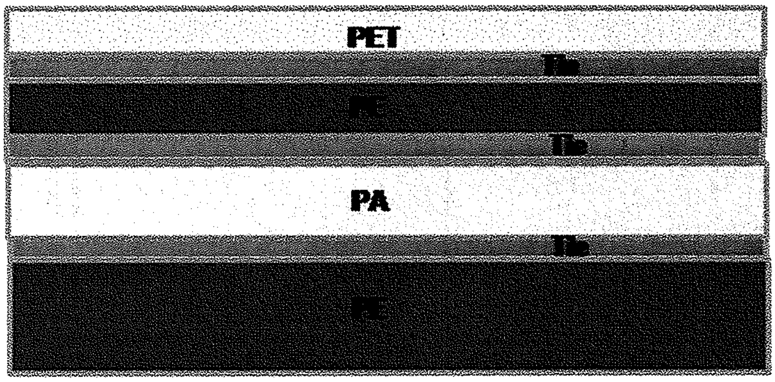


Figure 2

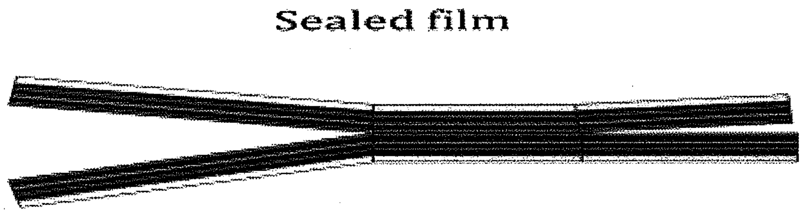


Figure 3

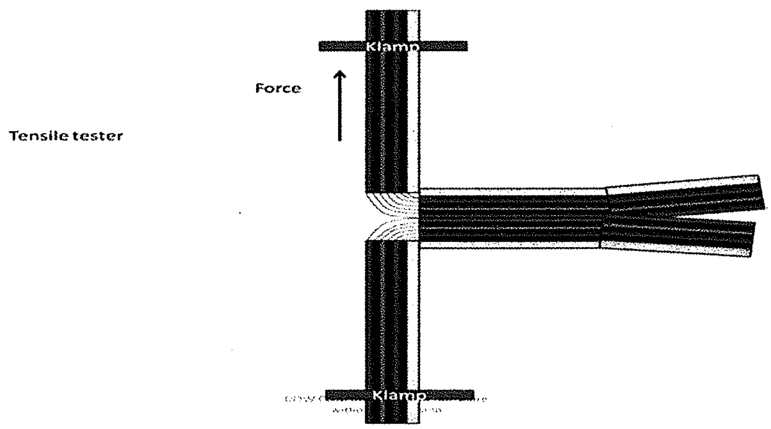

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004043694 A
- US 3645992 A
- EP 0129368 A
- EP 0260999 A
- US 4701432 A
- US 4937301 A
- US 4935397 A
- US 5055438 A
- WO 9007526 A
- US 5272236 A
- US 5278272 A
- US 4076698 A, Anderson
- US 7608668 B
- US 7858706 B
- US 7893166 B
- US 7947793 B


### Non-patent literature cited in the description


- Amine modified polyethylenes, prepared in near critical propane, as adhesion promoting agents in multilayered HDPE/PET films. *Polymer Engineering & Science,* 01 January 2001, vol. 41 (1), 86-94
- **RANDALL.** *Rev. Macromol. Chem. Phys.,* 1989, vol. C29 (2, 3), 285-297
- **ZIMM, B.H. ; STOCKMAYER, W.H.** *J. Chem. Phys.,* 1949, vol. 17, 1301
- **RUDIN, A.** Modern Methods of Polymer Characterization. John Wiley & Sons, 1991, 103-112
- **POTEMKIN.** *Physical Review E,* 1998, vol. 57 (6), 6902-6912
- **DOBRYNIN.** *J. Chem. Phys.,* 1997, vol. 107 (21), 9234-9238
- **WILLIAMS ; WARD.** *Journal of Polymer Science, Polymer Letters,* 1968, vol. 6 (621
- **WILLIAMS ; WARD.** *J. Polym. Sc., Polym. Let.,* 1968, vol. 6, 621